Europäisches Patentamt

European Patent Office

Office européen des brevets

(19)

(11) Publication number: **0 152 210**
**A1**

## (12) EUROPEAN PATENT APPLICATION

(21) Application number: **85300514.8**

(22) Date of filing: **25.01.85**

(51) Int. Cl.⁴: **F 16 C 19/12**
**G 09 F 7/22**

(30) Priority: **27.01.84 AU 3382/84**

(43) Date of publication of application:
**21.08.85 Bulletin 85/34**

(84) Designated Contracting States:
**AT BE CH DE FR GB IT LI LU NL SE**

(71) Applicant: **Hannemann, Hans Georg**
**15 Paxton Street**
**East Malvern Victoria 3145(AU)**

(72) Inventor: **Hannemann, Hans Georg**
**15 Paxton Street**
**East Malvern Victoria 3145(AU)**

(74) Representative: **Allen, Oliver John Richard et al,**
**Lloyd Wise, Tregear & Co. Norman House 105-109 Strand**
**London, WC2R 0AE(GB)**

(54) **Bearing assembly.**

(57) A bearing assembly (22) for a sign (10) having a rotatable panel (18) has a first cylindrical member (48) having an axial bore (26) in one end thereof the bore (26) defining a sleeve (74). The bore (26) communicates with an axial passage (30) which has a diameter less than that of a ball bearing (36) and constitutes a first seat for the ball bearing. There is a second cylindrical member (50) having a recess (52) in one end, the recess having a diameter greater than that of the ball bearing (36) and a depth less than that of the ball bearing (36), and constitutes a second seat (54) for the ball bearing. The first member (48) may be connected respectively to a panel (18) or the frame (12) of the sign (10) and the second member may be connected to the other of those two elements.

EP 0 152 210 A1

Croydon Printing Company Ltd.

assembly constituting the rotatable mounting, said assembly comprising a first generally cylindrical member, a second generally cylindrical member and a ball bearing, said first member having a recess in one end thereof, part of said recess having a dimension less than the diameter of said ball bearing and defining a seat for said ball bearing, said second generally cylindrical member having a recess in one end thereof, said recess having a dimension greater than the diameter of said ball bearing, the recess of said first member defining a sleeve extending from said one end to surround part of said second member, said first member being attached to said frame or said panel and said second member being attached to said panel or said frame.

The invention further provides a bearing assembly including a first member, a second member, and a ball bearing located between said first member and said second member, said first member having a recess therein, a part of which defines a first bearing seat for said ball bearing, and said second member having a recess therein defining a second bearing seat for said ball bearing, said assembly having means to prevent the separation of said first and second members

Fig. 1 is a perspective view from beneath of upper and lower bearing assemblies for use with a sign having a rotatable panel;

Fig. 2 is an exploded view from above of the assemblies of Fig. 1;

Fig. 3 is an exploded view from beneath of the assemblies of Fig. 1;

Fig. 4 is a cross-sectional view of the upper assembly of Fig. 1;

Fig. 5 is a cross-sectional view of the lower assembly of Fig. 1;

Fig. 6 is a perspective view of a sign having a rotatable panel, with which sign the assemblies of Fig. 1 may be used; and

Fig. 7 is a cross-sectional view of a modified upper bearing assembly.

The sign 10 of Fig. 6 has a frame 12 which is secured to a flattened cylindrical base 14, preferably by bolts, one of which is shown at 16. A panel 18 is rotatably mounted on frame

This invention relates to a bearing assembly, and in particular relates to a bearing assembly for use on signs having rotatable panels.

Rotating signs, in general, are well known. They have the advantage of attracting one's attention, through their movement, and have the capacity to present more than one piece of information. Many rotating signs including multiple-element signboards with rotatable elements, are mechanically operated. Some, however, are intended to be operated by the force of the wind. Unfortunately, there is often so much frictional resistance to rotation that quite a strong breeze is required before such a sign will rotate. Such signs are thus of little use.

The frictional resistance normally occurs in or in proximity to the bearing which supports a rotatable element from a frame. In United States patent no. 1,801,274 to Hinks, a shaft supporting a rotatable element rests on a single spherical anti-friction ball, but the shaft is also seated in two bushings which make frictional contact with the shaft. United States patent no. 346,197 to Fagenburg discloses a sign in which a rotatable element is supported on a stationary vertical shaft by a ball. However, a sleeve also surrounds the shaft such that frictional contact between the sleeve and shaft is inevitable.

It is an object of this invention to provide a bearing assembly for a rotating sign, which assembly will function to minimize frictional resistance and allow the rotatable element of the sign to rotate freely.

The invention provides a bearing assembly including a first member, a second member, and a ball bearing located between said first member and said second member, said first member having a recess therein a part of which defines a first bearing seat for said ball bearing, and said second member having a recess therein defining a second bearing seat for said ball bearing.

The invention also provides in a sign having a panel mounted on a frame for rotation in relation thereto, a bearing 12 by an upper bearing assembly 20 and a lower bearing assembly 22.

Preferably, the frame 12 is fabricated from steel, the panel 18 from sheet steel, and the·base 14 from concrete. The base 14 may be omitted, and the frame 12 may be attached to a post, a wall, or to any other appropriate object.

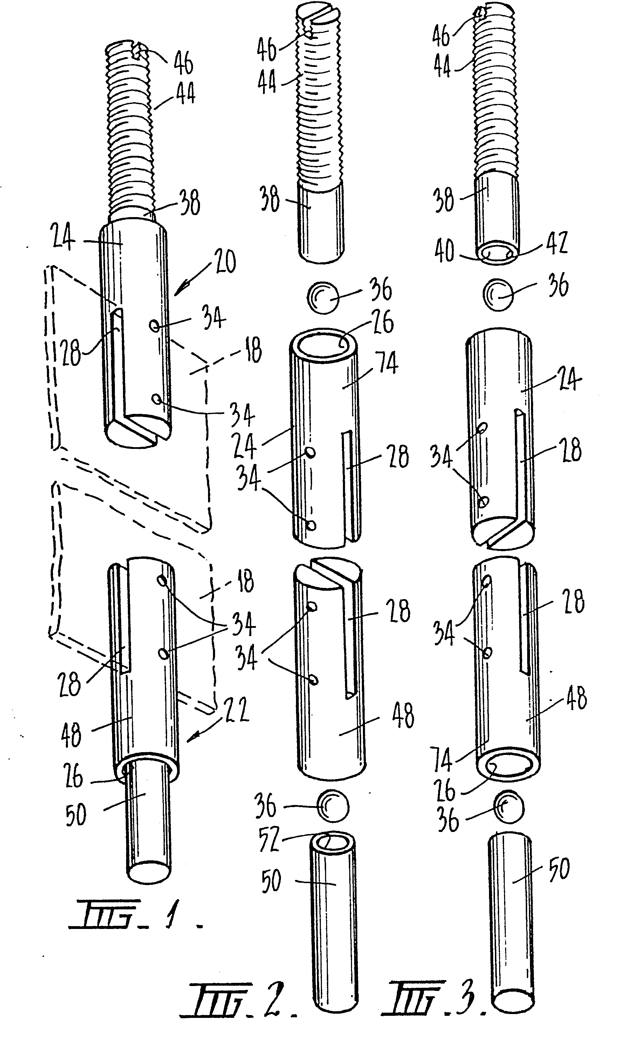

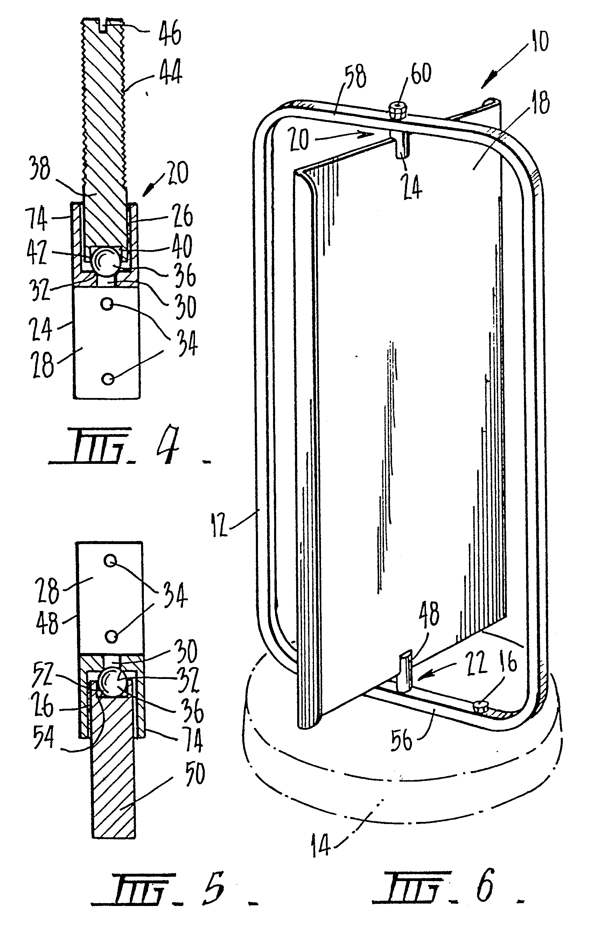

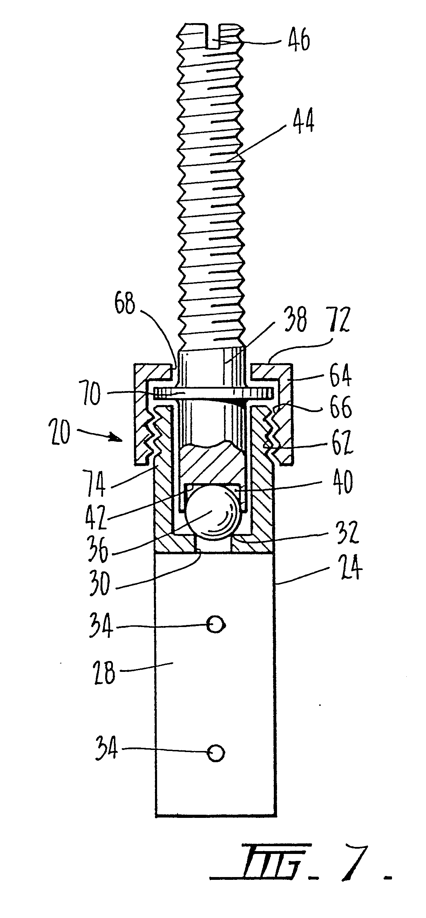

Upper and lower bearing assemblies 20,22 are illustrated in more detail in Figs. 1 to 5 inclusive. Upper bearing assembly 20 has a casing 24 which has an axial bore 26 therein, which bore extends part-way into the casing 24 from one end and defines an annular sleeve 74 which in the assembled bearing (Fig. 4) surrounds part of support member 38. A diametric slot 28 extends into casing 24 from the other end. The slot 28 communicates with bore 26 through passage 30, which passage forms, with the end of bore 26, a ball bearing seat 32.

Apertures 34 in the wall of casing 24 enable the panel 18 (parts of which are shown in broken lines in Fig. 1) of a sign 10 to be secured to casing 24 by means of rivets or other fastening devices. A ball bearing 36 is adapted to be located on seat 32.

Support member 38 is generally cylindrical, and has a shallow bore 40 in one end, which bore forms a ball bearing seat 42. Most of the external surface of member 38 is provided with a thread 44, and the other end of the member 38 has a diametric slot 46 therein.

Lower bearing assembly 22 has a casing 48 identical with casing 24 described in relation to assembly 20, and also has an identical ball bearing 36. The assembly 22 also has a generally cylindrical support member 50, having at one end a shallow bore 52 identical with bore 40 of member 38, which bore forms a ball bearing seat 54.

Turning now to Figs. 4 and 5, where assemblies 20,22 are shown in an assembled condition, the self-centring capability can be seen. In the assembled bearings, the location of seatings 32 and 42, on the one hand, and 32 and 54, on the other hand, with respective ball bearings 36, means that members 38,50 are centred within respective bores 26, such that their external surfaces do not, under normal circumstances, come into frictional contact with the internal surfaces of bores 26.

In practice, signs 10 may be assembled as follows. Casings 24,48 are riveted or otherwise attached to panel 18. Member 50 is located in an aperture (not shown) in the lower section 56 of frame 12. Ball bearing 36 is dropped onto seat 54, and casing 48 is located over member 50 such that seating 32 is located on the ball bearing 36.

The second ball bearing 36 is dropped into bore 26 of casing 24 to seat on seating 32. Member 46 is dropped into bore 26. The panel 18 may then be deformed, in order to enable threaded portion 44 of member 38 to enter an aperture (not shown) in upper section 58 of frame 12. Member 38 may then be secured to section 58 by means of nuts 60 co-operating with threaded portion 44.

It has been found that the bearing of this invention is most effective in reducing the friction normally associated with rotating signs. The rotating movement of panels 18 is so free, that when a sign generally along the lines of that disclosed in Fig. 6 has been placed on the edge of a sidewalk or footpath, the panel 18 rotates as a result of the breeze created by passing automobiles. It is also possible to use such signs indoors, in arcades and shopping centres, where the air motion created by pedestrians can be sufficient to cause a panel 18 to rotate.

With an unbraced panel 18, it has been possible for a high wind or the actions of unauthorised persons to cause a panel 18 to become deformed, so that the elements of one or both of the assemblies 20,22 become separated, and the panel 18 may separate from the frame 12.

Fig. 7 shows an upper bearing assembly 20 with modifications to cater for such high winds or human interference. The same modifications may, of course, be made to a lower bearing assembly 22.

In this modified assembly, the external surface of casing 24 is provided with a screwthread 62 on the external surface of sleeve 74. A cap 64, with a corresponding internal thread 66, is adapted to screw onto thread 62. Cap 64 has an axial aperture 68. Member 38 is provided with an annular flange 70.

When assembled, the situation shown in Fig. 7 it can be seen that flange 70 is located between the top 72 of cap 64, and the open end of casing 24, and that the edges of flange 70 are spaced from the internal surface of cap 64.

In normal use, the bearing operates in the same way as described hereinbefore. Only if the panel 18 (not shown in Fig. 7) is subjected to a deforming force, will the elements of modified assembly 20 tend to separate. However, flange 70 will be retained by top 72 of cap 64, and accordingly the panel 18 cannot be separated from frame 12. In addition, if the deformation is caused by a high wind velocity, which will also cause the panel to rotate very quickly, the contact of flange 70 and top 72 of cap 64 will serve as a brake.

The modifications may be further altered, by rounding the external and internal corners between the sides and the top 72 of cap 64, and by rounding the edges of flange 70.

1.        A bearing assembly (20) including a first member (24),
a second member (38), and a ball bearing (36) located between
said first member (20) and said second member (38), said first
member (24) having a recess (26) therein, a part of which recess
(26) defines a first bearing seat (32) for said ball bearing (36),
and said second member (38) having a recess (40) therein defining
a second bearing seat (42) for said ball bearing.

2.        A bearing assembly (20) according to claim 1, wherein
said  part (30) of said recess in said first member (24) has a
diameter less than that of said ball bearing (36), and the recess
(40) in said second member (38) has a diameter greater than
that of said ball bearing (36).

3.        A bearing assembly (20) according to claim 2, wherein
said recess (40) in said second member (38) has a depth less
than the diameter of said ball bearing (36).

4.        A bearing assembly (20) according to any preceding claim,
wherein said first member (24) and said second member (38) are
both generally cylindrical  and said recess (26,40) are located
in end faces of said members.

5.        A bearing assembly (20) according to claim 4, wherein
said first (24) and second (38) members are substantially co-axial.

6.        A bearing assembly (20) according to any preceding claim,
wherein said recess (26) in said first member consists of a first
bore (26) which defines a sleeve (74) adapted to enclose part of
said second member (38), and a second bore (30) which communicates
with said first bore, the junction of said first (26) and second
(30) bores constituting said part of the recess in said first
member (24).

7.        A bearing assembly (20) according to any preceding claim,
wherein said second member (38) has means to enable attachment
of the second member (38) to a rotatable panel (18) for a sign
(10).

8.      A bearing assembly (20) according to claim 7, wherein said means is an external screwthread (44).

9.      A bearing assembly (20) according to any preceding claim, further including means to prevent separation of said first (24) and second (38) members.

10.     A bearing assembly (20) according to claim 9, wherein said means consists of an annular flange (70) on said first member (24), and  an apertured cap (64) removably mounted on said second member (38).

11.     A sign having a rotatable panel, the panel being rotatably mounted  in said sign by at least one bearing assembly according to any preceding claim.

0152210

_FIG_ 1.

_FIG_ 2.

_FIG_ 3.

_FIG. 4._

_FIG. 5._

_FIG. 6._

46

44

68

38 72

70

64

66

20

62

74

40

42

36

30

32

24

34

28

34

FIG. 7.

0152210

**European Patent Office**

**EUROPEAN SEARCH REPORT**

Application number

EP 85 30 0514

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| X | GB-A-2 094 533 (MOTT) <br> * Page 1, line 124 - page 2, line 31; figure 1 * | 1,9,11 | F 16 C 19/12 <br> G 09 F 7/22 |
| A | | 6-8,10 | |
| | --- | | |
| X | FR-A- 377 071 (WEBER) <br><br> * Page 1, figure 3 * | 1,5,7, 11 | |
| A | | 3,4,6 | |
| | --- | | |
| X | CH-A- 484 374 (OY) <br><br> * Column 3, lines 53-58; figures 1,2 * | 1,4,5, 9 | |
| | | | **TECHNICAL FIELDS SEARCHED (Int. Cl.4)** |
| A | | 6,8,10 | F 16 C <br> G 09 F |
| | --- | | |
| X | GB-A- 461 096 (PARRY) <br> * Page 2, figures * | 1,6,8 | |
| | --- | | |
| A | GB-A- 714 650 (CHANCE) <br> * Figure 1 * | 1-6,8 | |
| | --- | | |
| A | US-A-2 229 969 (GOSS) <br><br> * Column 2, lines 50-55; figures * | 1,5,6, 9,10 | |
| | --- -/- | | |

The present search report has been drawn up for all claims

| Place of search | Date of completion of the search | Examiner |
|---|---|---|
| THE HAGUE | 21-05-1985 | ORTHLIEB CH.E. |

## European Patent Office

| Category | Citation of document with indication, where appropriate, of relevant passages | Relevant to claim | CLASSIFICATION OF THE APPLICATION (Int Cl 4) |
|---|---|---|---|
| A | FR-A- 393 724 (ALBRIGHT) | | |
| A | FR-A-1 204 813 (BOUARD) | | |
| A | US-A-2 985 976 (PARKER) | | |
| A | GB-A- 220 852 (POTTER) | | |
| A | DE-C- 749 196 | | |
| A | NL-C- 60 766 (LANDIS) | | TECHNICAL FIELDS SEARCHED (Int. Cl.4) |

The present search report has been drawn up for all claims

| Place of search | Date of completion of the search | Examiner |
|---|---|---|
| THE HAGUE | 21-05-1985 | ORTHLIEB CH.E. |